# Europäisches Patentamt

## European Patent Office

## Office européen des brevets

(19)

(11) Veröffentlichungsnummer: **0 060 334**
**A1**

(12) # EUROPÄISCHE PATENTANMELDUNG

(21) Anmeldenummer: **81109052.1**

(22) Anmeldetag: **27.10.81**

(51) Int. Cl.³: **H 04 Q 11/04**

(30) Priorität: **13.03.81 DE 3109767**

(43) Veröffentlichungstag der Anmeldung: **22.09.82**
**Patentblatt 82/38**

(84) Benannte Vertragsstaaten: **AT CH FR GB IT LI SE**

(71) Anmelder: **SIEMENS AKTIENGESELLSCHAFT Berlin und München, Postfach 22 02 61, D-8000 München 22 (DE)**

(72) Erfinder: **Binz, Reiner, Dipl.-Ing., Rosenstrasse 5, D-8021 Hohenschäftlarn (DE)**
Erfinder: **Knorpp, Eberhard, Dipl.-Ing., Zugspitzstrasse 26, D-8035 Gauting (DE)**
Erfinder: **Von Sichart, Frithjof, Dr. Dipl.-Phys., Karl-Theodor-Strasse 72, D-8000 München 40 (DE)**

(54) **Zeitmultiplexkoppelfeldeinheit zur Zeit-Raum-Vermittlung.**

(57) Bei Koppelfeldeinheiten dieser Art, die unter Verwendung eines zyklisch eingeschriebenen und wahlfrei ausgelesenen Informationsspeichers arbeiten, ist eine Begrenzung der Anschlußzahlen insbesondere dadurch gegeben, daß beim wahlfreien Auslesen eine bestimmte Geschwindigkeit nicht überschritten werden kann. Erfindungsgemäß werden dadurch höhere Anschlußzahlen erreicht, daß die Koppelfeldeinheiten aus Bausteinen (BS1 und BS2) zusammengesetzt werden, deren gleichgeordneten Eingänge (PCMk) miteinander verbunden sind und in die jeweils je Pulsrahmen mehr PCM-Worte eingeschrieben als ausgelesen werden. Damit ist die Auslesefrequenz niedrig gehalten, wegen der eingangsseitigen Vielfachschaltung mehrerer Bausteine aber dennoch ein blockierungsfreies Durchschalten möglich.

EP 0 060 334 A1

SIEMENS AKTIENGESELLSCHAFT
Berlin und München

0060334

Unser Zeichen
VPA 81 P 6 2 1 9 E

### Zeitmuliplexkoppelfeldeinheit

Die Erfindung betrifft eine Zeitmultiplexkoppelfeldeinheit für den Anschluß mehrerer PCM-Leitungen, durch die eine zeitliche und eine räumliche Zuordnung von auf PCM-Leitungen für ankommende Übertragungsrichtung benutzten Zeitkanälen zu auf PCM-Leitungen für abgehende Übertragungsrichtung benutzten Zeitkanälen durch zyklisches Einschreiben der ankommenden PCM-Worte in die Speicherzellen ihres Informationsspeichers und durch entsprechend verzögertes wahlfreies Auslesen der abgehenden PCM-Worte aus diesen Speicherzellen bewirkt wird.

Bei bekannten Koppelfeldern, die aus derartigen Koppelfeldeinheiten aufgebaut sind (z. B. "International Zürich-Seminar" 1972, B4 (1) bis B4 (5)) weisen die verwendeten Koppelfeideinheiten eine gleiche Anzahl von Eingängen und Ausgängen auf, es sind also gleich viele PCM-Leitungen für ankommende Übertragungsrichtung wie PCM-Leiungen für abgehende Übertragungsrichtung angeschlossen.

Wenn die Anzahl der an ein Koppelfeld anzuschließenden PCM-Leitungen die Anzahl der Eingänge und Ausgänge solcher Koppelfeldeinheiten übersteigt, kann entweder ein mehrstufiges Koppelfeld aus solchen Koppeleinheiten aufgebaut werden oder aber es kann das Koppelfeld aus mehreren einstufigen Koppelfeldteilen gebildet werden, die jeweils soviele Koppeleinheiten wie Koppelfeldteile umfassen, wobei die an die Koppelfeldeinheiten angeschlossenen Zeitmultiplexleitungen für ankommende Übertragungsrichtung auch mit jeweils einem Eingang einer Koppelfeldeinheit jedes anderen Koppelfeldteils in Verbindung stehen und gleichgeordnete Ausgänge der Vermittlungseinheiten

Rr 1 BZA / 06.03.1981

innerhalb der einzelnen Koppelfeldteile miteinander verbunden an eine Zeitmultiplexleitung für abgehende Übertragungsrichtung angeschlossen sind (s. "Commutation & Electronique", No. 40, Januar 1973, S. 14-40).

Der mehrstufige Koppelfeldaufbau bedingt eine Erhöhung der Laufzeiten bei der Verbindung von Eingängen und Ausgängen sowie, sofern eine geradzahlige Stufenzahl vorliegt, eine Schieflastempfindlichkeit. Bei den erwähnten einstufigen Koppelfeldversionen sind diese Nachteile zwar nicht vorhanden, dafür führt eine Vervielfachung der Anschlußmöglichkeiten zu einem quadratischen Zuwachs der benötigten Koppelfeldbaueinheiten.

Einer Vergrößerung der Anzahl der an eine einzige Zeitmultiplexkoppelfeldeinheit angeschlossenen PCM-Leitungen sind, insbesondere wenn diese Einheiten in integrierter Schaltkreistechnik aufgebaut werden sollen, einerseits technologische andererseits von den für das Einschreiben und das Auslesen erforderlichen Taktgeschwindigkeiten her Grenzen gesetzt.

Der Erfindung liegt nun die Aufgabe zugrunde, eine Zeitmultiplexkoppeleinheit anzugeben, die ungeachtet der letztgenannten Grenzen den Anschluß einer größeren Anzahl von Eingangs- und Ausgangsleitungen zuläßt und damit günstigere Voraussetzungen für den Aufbau von Koppelfeldern mit größeren Anschlußzahlen schafft.

Diese Aufgabe wird mit einer Zeitmultiplexkoppeleinheit der eingangs genannten Art erfindungsgemäß dadurch gelöst, daß diese aus einer Mehrzahl, vorzugsweise 2, gleichen Koppelfeldbausteinen besteht, die Eingänge für den Anschluß von PCM-Leitungen für kommende Übertragungsrichtung in derartiger Anzahl und/oder zur Übertragung von PCM-Informationen mit derartiger Bittaktfrequenz sowie

0060334

jeweils einen Informationsspeicher entsprechender Kapazität aufweisen, daß je Pulsrahmen PCM-Worte in einer Anzahl eingeschrieben und gespeichert werden können, die ein der genannten Mehrzahl zahlenmäßig gleiches Vielfaches der Anzahl der PCM-Worte ist, die während eines Pulsrahmens auf die an die Ausgänge angeschlossenen PCM-Leitungen für abgehende Übertragungsrichtung ausgelesen werden können, und daß jeweils gleichgeordnete Eingänge dieser Koppelfeldbausteine miteinander verbunden sind.

Der Erfindung liegt die Erkenntnis zugrunde, daß die Grenzen für die Taktfrequenz beim Betrieb solcher Zeitmultiplexkoppelfeldeinheiten, die, wie angeführt, insbesondere bei einem Aufbau in integrierter Schaltkreistechnik relativ schnell erreicht sind, beim zyklischen Einschreiben von PCM-Worten in den Informationsspeicher solcher Einheiten höher liegt als bei dem wahlfreien Auslesen aus einem solchen Informationsspeicher. Das bedeutet also, daß die erfindungsgemäße Zeitmultiplexkoppelfeldeinheit nicht nur im Hinblick auf die technologischen Probleme bei der Herstellung eines integrierten Bausteines, die beispielsweise auch in der Beschränkung der Anzahl der nach außen zu führenden Anschlüsse liegt, sondern auch im Hinblick auf die genannten Taktfrequenzen eine günstige Lösung darstellt.

Ein Zeitmultiplexkoppelfeld, das unter Verwendung von Zeitmultiplexkoppelfeldeinheiten aufgebaut ist, wird, sofern eine mehrstufige Anordnung gewählt wird, bis zu größeren Anschlußzahlen hin mit geringeren Stufenzahlen bzw., sofern die vorstehende einstufige Version gewählt wird, mit einem geringeren Aufwand auskommen als dies bei der Verwendung von Koppelfeldeinheiten der Fall ist, bei denen die Anschlußzahlgrenze aus den vorgenannten Gründen niedriger liegt.

0060334
81 P 6219 E

Nachstehend wird die Erfindung anhand von Ausführungsbeispielen unter Bezugnahme auf eine Zeichnung näher erläutert.

In der Zeichnung zeigen:

Figur 1 in Blockschaltbildform einen Baustein, wie er zum Aufbau der erfindungsgemäßen Zeitmultiplexkoppeleinheit Verwendung findet.

Figur 2 in vereinfachter Blockschaltbildform eine erfindungsgemäße Zeitmultiplexkoppelfeldeinheit.

Figur 3 und 4 Anschlußvarianten der Koppelfeldeinheit gemäß Figur 2.

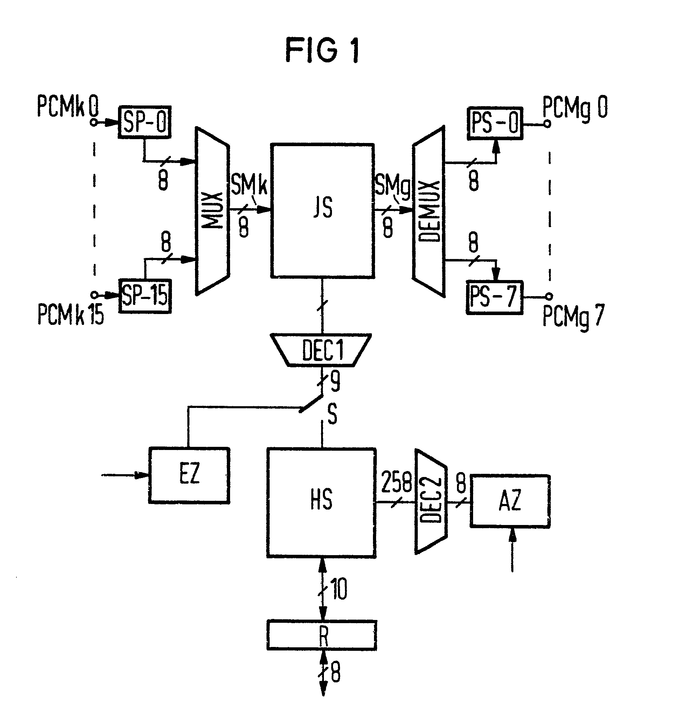

An den Koppelfeldbaustein gemäß Figur 1 sind 16 PCM-Leitungen für ankommende Übertragungsrichtungen PCMk0 bis PCMk15 sowie 8 PCM-Leitungen für abgehende Übertragungsrichtung PCMg0 bis PCMg7 angeschlossen. Der Zugang der PCM-Leitungen für ankommende Übertragungsrichtung erfolgt über leitungsindividuelle Serien-Parallel-Wandler SP0 bis SP15, durch die jeweils die auf den PCM-Leitungen seriell auftretenden Bits der PCM-Worte in Parallelform umgewandelt werden. Die Serien-Parallel-Wandler weisen demnach jeweils 8 Ausgangsleitungen auf.

Diese Ausgangsleitungen führen zu einem Multiplexer MUX, der die in Parallelform auftretenden PCM-Worte auf einer Supermultiplexleitung SMk vereinigt, die ebenfalls 8 Leitungsadern aufweist.

Diese Supermultiplexleitung SMk führt zu einem Informationsspeicher IS, der so viele Speicherzellen für jeweils ein PCM-Wort aufweist, wie PCM-Worte während eines Pulsrahmens über die PCM-Leitungen für ankommende Übertragungsrichtung angeliefert werden können. Im dargestellten Fall des Anschlusses von 16 PCM-Leitungen für ankommende Übertragungsrichtung, die jeweils einem PCM-Grundsystem 30/32 zugeordnet sein sollen, sind dies 512 Speicherzellen zu jeweils 8 Bit, also insgesamt Speicherplatz für 4096 Bit.

Das Einschreiben der auf den PCM-Leitungen PCMk0 bis PCMk15 ankommenden PCM-Worte in den Informationsspeicher IS erfolgt zyklisch, wozu ein Eingängszähler EZ über einen Decoder Dec1 die entsprechenden Ansteueradressen für die Informationsspeicherzellen liefert.

Das Auslesen der PCM-Worte aus dem Informationsspeicher IS erfolgt, wie angedeutet, wahlfrei. Zur Lieferung der entsprechenden Ansteueradressen dient ein Haltespeicher HS, der im vorliegenden Falle 256 Speicherzellen für jeweils 9 Bit und ein Parity-Bit umfassende Ansteueradressen enthält. Die Speicherzellen des Haltespeichers HS werden von einem Ausgängszähler AZ und über einen Decoder Dec2 zyklisch angesteuert. Sie geben hierbei über den Schalter S und den schon genannten Decoder Dec1 je Pulsrahmen 256 Ansteueradressen ab.

Die aus dem Sprachspeicher IS ausgelesenen PCM-Worte gelangen auf eine Supermultiplexleitung SMg für abgehende Übertragungsrichtung und an einen Demultiplexer DEMUX, von dem aus sie je nach zeitlicher Lage über jeweils 8 Leitungen umfassende Leitungsbündel an Parallel-Serien-Wandler PS0 bis PS7 gelangen, an deren Serienausgänge die schon erwähnten PCM-Leitungen für abgehende Übertragungsrichtung PCMg0 bis PCMg7 angeschlossen sind.

Aus den vorstehenden Erläuterungen ergibt sich, daß aufgrund des zyklischen Einschreibens doppelt so viel PCM-Worte in den Speicher IS gelangen wie beim wahlfreien Auslesen dem Speicher entnommen werden. Ein Erhöhen der Frequenz beim wahlfrei gesteuerten Auslesen würde nicht mehr mit Sicherheit zu einem fehlerfreien Betrieb führen.

0060334

Der Vollständigkeit halber sei als weiterer Bestandteil der Fig. 1 noch ein Register R erwähnt, das eine Schnittstelle zu einer Steuerung, beispielsweise in Form eines $\mu$-Prozessors darstellt, von dem aus im Zusammenhang mit dem Aufbau neuer Verbindungen jeweils entsprechende Informationsspeicheradressen in den Haltespeicher eingetragen werden.

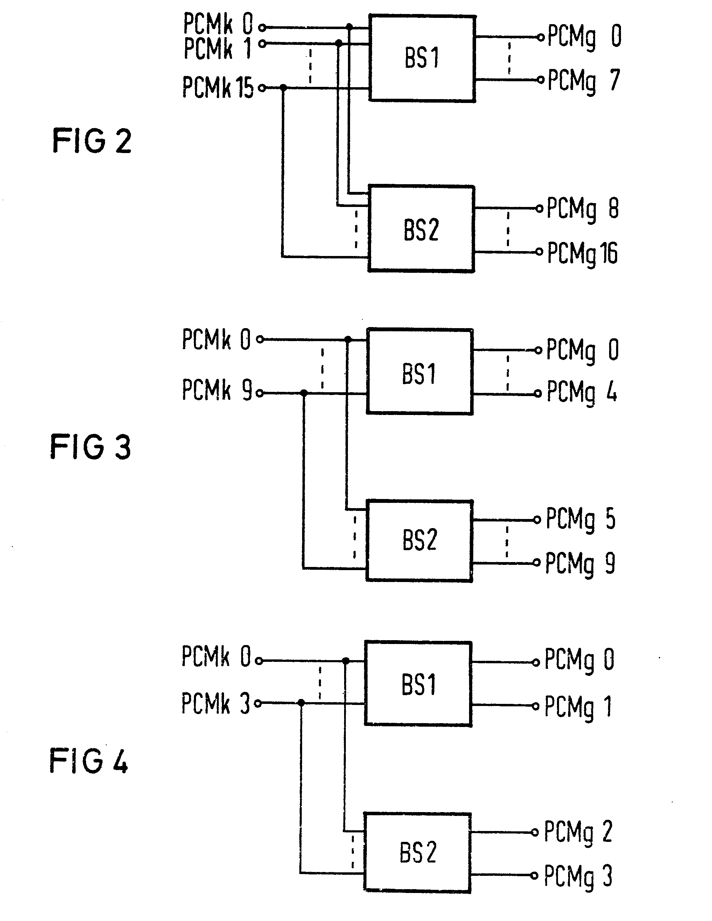

In Figur 2 ist nun dargestellt, wie unter der Verwendung von mehreren Koppelfeldbausteinen der in Figur 1 dargestellten Art eine erfindungsgemäße Koppelfeldeinheit aufgebaut werden kann. Wenn vorausgesetzt wird, daß die Anzahl der je Pulsrahmen eingeschriebenen PCM-Worte zweimal so groß ist wie diejenige der wahlfrei ausgelesenen, was bei der Erläuterung des Beispiels gemäß Figur 1 angenommen worden ist, dann werden zwei solcher Koppelfeldbausteine BS1 und BS2 zu einer Koppelfeldeinheit vereinigt. Wäre das Verhältnis von eingeschriebenen zu ausgelesenen PCM-Worten 3:1, dann würde man 3 Koppelfeldbausteine benötigen. Einer Vergrößerung des genannten Verhältnisses bzw. der Anzahl der Koppelfeldbausteine sind allerdings aus Aufwandsgründen Grenzen gesetzt. Wie die Figur 2 zeigt, sind gleichgeordnete Eingänge der beiden Bausteine BS1 und BS2 dieser Koppelfeldeinheit miteinander verbunden. Im Falle der Verwendung von Bausteinen gemäß Figur 1 weist eine solche Koppelfeldeinheit gemäß Figur 2 also 16 Eingänge für den Anschluß von 16 PCM-Leitungen für ankommende Übertragungsrichtung PCMk0 bis PCMk15 sowie ebenfalls 16 Ausgänge für den Anschluß von PCM-Leitungen für abgehende Übertragungsrichtung PCMg0 bis PCMg15 auf.

Beim Betrieb einer derartigen Zeitmultiplexkoppelfeldeinheit werden sämtliche der auf den 16 angeschlossenen PCM-Leitungen für ankommende Übertragungsrichtung angeliefer-

0060334

ten PCM-Worte sowohl in den Informationsspeicher der Koppelfeldeinheit BS1 als auch in den Informationsspeicher der Koppelfeldeinheit BS2 eingeschrieben, aus diesen Informationsspeichern werden bei den einzelnen Koppelfeldeinheiten jedoch nur diejenigen PCM-Worte wieder ausgelesen, die auf einer der bei dem betreffenden Koppelfeldbaustein angeschlossenen PCM-Leitungen für abgehende Übertragungsrichtung weiter übertragen werden sollen. Die Koppelfeldeinheit gemäß Figur 2 stellt also ein blockierungsfreies Koppelfeld dar.

In Abweichung von den beschriebenen Verhältnissen, bei denen angenommen wurde, daß an die Koppelfeldbausteine bzw. Koppelfeldeinheit PCM-Leitungen angeschlossen sind, die PCM-Grundsysteme führen, im Falle des PCM-Systems 30/32 also eine Bittaktfrequenz von 2,048 MHz zugrunde liegt, können auch PCM-Leitungen angeschlossen sein, die PCM-Obersysteme führen, bei denen die Bittaktfrequenz entsprechend höher ist. Es muß hierbei nur dafür gesorgt sein, daß die Anzahl der je Pulsrahmen von den PCM-Leitungen für ankommende Übertragungsrichtung her eingeschriebenen PCM-Worte die Anzahl 512 nicht übersteigt bzw. nicht mehr als 256 PCM-Worte je Pulsrahmen aus jedem der Informationsspeicher ausgelesen werden müssen.

Wie die Figuren 3 und 4 zeigen, gibt es hierbei verschiedenen Kombinationsmöglichkeiten.

So sind gemäß Figur 3 an das erfindungsgemäße Zeitmultiplexkoppelfeld 8 PCM-Leitungen für ankommende Übertragungsrichtung PCMk0 bis PCMk7 angeschlossen, auf denen 2,048 Mbit/s übertragen werden, sowie 2 PCM-Leitungen PCMa8 und PCMa9 für ankommende Übertragungsrichtung, auf denen 8,192 Mbit/s auftreten. An die Ausgänge jeder der Koppelfeldbausteine BS1 und BS2 sind 4 PCM-Leitungen für abgehende Übertragungsrichtung PCMg0 bis PCMg3 bzw. PCMg5

0060334

bis PCMg8, auf denen 2,048 Mbit/s übertragen werden und eine solche PCM-Leitung PCMg4 bzw. PCMg9 angeschlossen, auf der 8,192 Mbit/s auftreten.

Beim Ausführungsbeispiel gemäß Figur 4 sind eingangsseitig 4 PCM-Leitungen PCMk0 bis PCMk3 angeschlossen, die PCM-Obersysteme mit einer Übertragungsfrequenz von 8,192 Mbit/s führen, wogegen ausgangsseitig jeweils 2 PCM-Leitungen PCMg0 bis PCMg3 für PCM-Obersysteme mit einer Übertragungsfrequenz von 8,192 Mbit/s angeschlossen sind.

4 Patentansprüche
4 Figuren

## Patentansprüche

1. Zeitmultiplexkoppelfeldeinheit für den Anschluß mehrerer PCM-Leitungen, durch die eine zeitliche und räumliche Zuordnung von auf PCM-Leitungen für ankommende Übertragungsrichtung benutzten Zeitkanälen durch zyklisches Einschreiben der ankommenden PCM-Worte in die Speicherzellen ihres Informationsspeichers und durch entsprechend verzögertes wahlfreies Auslesen der abgehenden PCM-Worte aus diesen Speicherzellen bewirkt wird, d a - d u r c h g e k e n n z e i c h n e t, daß sie aus einer Mehrzahl, vorzugsweise 2, gleichen Koppelfeldbausteinen mit eigenen Schreib- und Lese-Ansteuereinrichtungen (BS1, BS2) besteht, die Eingänge für den Anschluß von PCM-Leitungen für kommende Übertragungsrichtung (PCMk0 bis PCMk15) in derartiger Anzahl und/oder zur Übertragung von PCM-Informationen mit derartiger Bittaktfrequenz sowie jeweils einen Informationsspeicher entsprechender Speicherkapazität aufweisen, daß je Pulsrahmen PCM-Worte in einer Anzahl (z. B. 512) eingeschrieben und gespeichert werden können, die ein der genannten Mehrzahl zahlenmäßig gleiches Vielfaches der Anzahl der PCM-Worte ist, die während eines Pulsrahmens auf die an die Ausgänge angeschlossenen PCM-Leitungen für abgehende Übertragungsrichtung (PCMg/ bis PCMg15) ausgelesen werden können, und daß jeweils gleich geordnete Eingänge dieser Koppelfeldbausteine (BS1, BS2) miteinander verbunden sind.

2. Zeitmultiplexkoppelfeldeinheit nach Anspruch 1, d a - d u r c h g e k e n n z e i c h n e t, daß die Anzahl der eingangsseitig und ausgangsseitig angeschlossenen PCM-Leitungen (PCMk, PCMg) gleich groß ist.

3. Zeitmuliplexkoppelfeldeinheit nach Anspruch 1, d a - d u r c h g e k e n n z e i c h n e t, daß sie dem Anschluß von PCM-Leitungen dienen, die PCM-Systeme dersel-

0060334

ben Ordnung führen. (Figur 4).

4. Zeitmultiplexkoppelfeldeinheit nach Anspruch 1, d a -
d u r c h   g e k e n n z e i c h n e t, daß sie eingangsseitig und ausgangsseitig dem Anschluß von PCM-Systemen
dienen, die zumindest teilweise, PCM-Systeme unterschiedlicher Ordnung führen. (Figur 3).

FIG 1

**FIG 2**

PCMk 0 — BS1 — PCMg 0
PCMk 1 —
PCMk 15 —
— PCMg 7

BS2 — PCMg 8
— PCMg 16

**FIG 3**

PCMk 0 — BS1 — PCMg 0
PCMk 9 — — PCMg 4

BS2 — PCMg 5
— PCMg 9

**FIG 4**

PCMk 0 — BS1 — PCMg 0
PCMk 3 — — PCMg 1

BS2 — PCMg 2
— PCMg 3

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | COMMUTATION & ELECTRONIQUE, nr. 43, Oktober 1973, Seiten 52-70; Issy-Les-Moulineaux, FR. P. VOYER et al.: "Réseaux de connexion temporels à grande capacité" * Abschnitt III.2.3.; Figur 6 * | 1-3 | H 04 Q 11/04 |
| Y | | 4 | |
| X | AEU, Band 35, Heft 1, Januar 1981, Seiten 7-19, Stuttgart, DE. A. LOTZE et al.: "Verkehrsleistung und wirtschaftliche Struktur von PCM-Koppelanordnungen in digitalen Fernsprechvermittlungsstellen" * Abschnitt 5.2; Figur 9 * | 1-3 | |
| Y | | 4 | **RECHERCHIERTE SACHGEBIETE (Int. Cl. ³)** |
| Y | DE-B-2 333 254 (SIEMENS) * Figur * | 4 | H 04 Q 11/04 |
| A | US-A-3 678 205 (COHEN et al.) * Spalte 1, Zeilen 25-36; Figur 1 * | 1-3 | |

Der vorliegende Recherchenbericht wurde für alle Patentansprüche erstellt.

| Recherchenort DEN HAAG | Abschlußdatum der Recherche 04-06-1982 | Prüfer MIKKELSEN C. |
|---|---|---|